# EUROPEAN PATENT APPLICATION

(11) **EP 2 639 151 A1**
(43) Date of publication of application: **18.09.2013**
(21) Application number: 11822018.5
(22) Date of filing: 22.04.2011
(51) Int. Cl.: B63J 99/00, H02J 3/04, H02J 3/38, B66C 23/18

(54) **DEVICE FOR TRANSMITTING/RECEIVING POWER USING SHIP**

(30) Priority: 01.09.2010 KR 20100085382
(71) Applicant: Halla Engineering&Industrial Development Co. Ltd., Gyeonggi-do 442-834 (KR)
(72) Inventor: PARK, Sang Pyo, Hanam-si Gyeonggi-do 465-120 (KR); NAM, Kee Young, Changwon-si Gyeongsangnam-do 642-777 (KR); SEO, Bong Seok, Yongin-si Gyeonggi-do 448-160 (KR); LEE, Dong Hoon, Namyangju-si Gyeonggi-do 472-938 (KR); CHO, Sang Ki, Seongnam-si Gyeonggi-do 461-182 (KR); KIM, Jung Tae, Seoul 138-110 (KR)
(74) Representative: Zoli, Filippo
(86) International application number: PCT/KR2011/002960
(87) International publication number: WO 2012/030043

(57) **Abstract**

The present invention relates to a device for transmitting/receiving power using a ship, the ship comprising: a generator, which is arranged inside the ship, for producing power by means of generating electricity; a power transmission crane, which is arranged on one side of the ship and protrudes to a predetermined side of the exterior of the ship; a power transmission cable, one side of which connects to the generator and the other side of which is supported by the power transmission crane so as to be disposed on one side of the exterior, for transmitting the power which is generated from the generator; a transmission access device which is coupled so as to be connected to the power transmission cable and supply power; and a power reception device, which is arranged separately away on one side of the ship, connected to the power transmission access device so as to supply the power generated from the generator, and which has on one side a power reception cable for supplying the supplied power to the exterior.

## Description

### Cross-reference to related application

This application claims the benefit of Korean Patent Application No.10-2010-0085382, filed on September 1, 2010 in the Korean Intellectual Property Office, the disclosure of which is incorporated herein by reference.

### Technical Field

The present invention relates to a device for transmitting and receiving power using a ship.

### Background Art

In general, power transmission is a process of transmitting power generated in a power plant. In order to transmit power generated in the power plant to an electricity consuming location, power generated in the power plant is transmitted through a transmission line, and after power is transmitted, a voltage of the power is lowered to a voltage required in each electricity consuming location via a substation, and the power is supplied. The power plant is generally installed on the ground, and generated power is transmitted through a transmission line, in a substation, a voltage of the power is transformed to a voltage in which an electricity user requires, and the substation supplies the power through a power distribution line. When the transmission line transmits power at a far distance from the power plant to the substation, power damage occurs due to resistance of the line, and in order to reduce power damage, an electric wire having a large conductor sectional area is used or the power should be supplied with an increased transmission voltage. However, a limitation exists in increasing a size of the electric wire and a magnitude of a transmission voltage and thus a size of the electric wire and a magnitude of the transmission voltage should be determined in consideration of economical efficiency.

Particularly, in order to supply power to an island region, a power plant is directly built in the island region or a transmission line is installed from a power plant of inland to the bottom of the sea, and power is supplied through the transmission line. However, when building a power plant in an island region, in a state in which materials and human power to build the power plant are moved to an island using a ship, a work should be performed, and thus there is a problem that a transport cost and a construction cost are excessively consumed.

Further, in an island region, space to build a power plant is insufficient, and even after the power plant is built, subsidiary facilities in which human power to maintain and manage the power plant resides should be further built, but space for the subsidiary facilities is insufficient, it is difficult to build the power plant.

In order to install a transmission line from a power plant located at inland to an island region, power is supplied via a ground line and a submarine line of sea and thus when power is transmitted between the power plant and the island, due to a failure or an accident between the line and a device, there is a problem that a huge power failure occurs.

Further, it is difficult to install a submarine line to be installed at the sea at the bottom of the sea of a deepwater location, and as an ocean current continuously operates, there is a problem that an installation and management cost increases.

Accordingly, development of a device that can move at the sea while generating power at the inside in a ship form and that can transmit generated power in a state adjacent to an island after being moved is urgently requested.

### Disclosure

### Technical Problem

The present invention is made to overcome the above mentioned problems, and it is an object of the present invention to provide a device for transmitting and receiving power using a ship that can efficiently supply power by supplying power using a ship that generates power at the sea in a ship form in an island region or in a coast region having no power plant.

### Technical Solution

To achieve the above objects, there is provided a power transmitting and receiving device using a ship, including: a power generation device disposed at the inside of the ship and for generating power by generation; a power transmission crane disposed at one side of the ship and protruded to preset one side of the outside of the ship; a power transmission cable having one side connected to the power generation device and having the other side supported by the power transmission crane and disposed at one side of the outside to transmit generation power in the power generation device; a power transmission connecting device disposed at an end portion of one side of the outside of the power transmission crane and connected to the power transmission cable to be fastened to supply transmitted power; and a power reception device separately disposed from one side of the ship and connected to supply power generated in the power generation device to the power transmission connecting device and having a power reception cable for supplying power supplied to one side to the outside, wherein in a state in which the ship is moved to a periphery of the power reception device, by positioning the power transmission connecting device for supporting the power transmission cable at an upper portion of the power reception device by manipulating of the power transmission crane, the power transmission connecting device and the power reception device are fastened, and thus power generated in the power generation device is supplied to the outside through the power reception cable of the power reception device fastened to the power transmission connecting device at the sea via the power transmission cable.

The power generation device may include: a waste receiving chamber disposed at the inside of the ship and in which sea waste is loaded to supply as fuel of power generation; a generator disposed at the inside of the ship and positioned at one side of the waste receiving chamber and for receiving supply of sea waste, which is fuel to generate power by power generation; and a rectifier installed between the generator and the power transmission cable and for rectifying to convert power generated in the generator to power that can transmit, wherein the power generation device may generate power in the generator using the sea waste loaded in the waste receiving chamber as fuel at the inside of the moved ship, rectify power transmitted to the rectifier, and supply the rectified power to the power transmission cable.

The power transmission crane may include: a crane strut fixed to one side of the ship and protruded to an upper portion; a crane arm having one side protruded to the crane strut and protruded to one side of the outside to be supported to adjust an angle thereof to the crane strut; and a cable support body disposed at the inside of the crane strut and for supporting the power transmission cable positioned at the crane arm side through the crane strut, wherein the other side of the power transmission cable may be connected to the power transmission connecting device via the crane strut and the crane arm while being supported by the cable support in a state in which one side of the power transmission cable is connected to the power generation device.

The crane strut may include: a lower strut fixed to one side of the ship and provided in a strut shape in an upper direction at one side of the ship; an upper strut disposed at an upper portion of the lower strut and separated from the lower strut to be supported by the crane arm; and a vertical transfer device disposed between the lower strut and the upper strut and for vertically transferring the upper strut, wherein the upper strut may be vertically moved from the lower strut fixed to the ship by operation of the vertical transfer device.

The crane arm may include: arm bodies disposed in plural at one side of the crane strut and extended toward one side in an overlapped state; and extensible devices each disposed in an overlapped lower portion of the plurality of arm bodies and for moving to extend and press the overlapped arm body in one side direction, wherein the arm bodies may be extended and retracted to move the power transmission connecting device disposed at an end portion of one side in a direction of the power reception device by operation of the extensible device when the power reception device is fastened, and the arm bodies may be pressed in a direction of the crane strut by operation of the extensible device, when power supply to the power reception device is complete.

The extensible device may include: extensible gears each disposed at an upper portion of the plurality of arm bodies and provided in a rack gear form with a preset length to move in one side direction of the outside in which the arm bodies are moved; moving gear bodies each disposed at an upper portion of the extensible gear and gear-coupled to the extensible gear to be provided in a pinion gear form to move together the extensible gear and the arm body by a rotation; and extensible motors connected to the moving gear body and each positioned at one side of the plurality of arm bodies and for providing power for rotating the moving gear body, wherein the plurality of arm bodies each may be moved together with the extensible motor while the moving gear body rotates by operation of the extensible motor installed at each arm body to be extended and retracted on a step basis.

The power transmission connecting device may include: at least one fastening body disposed at one side of the outside of the power transmission crane and connected to supply power to the power transmission cable; a fastening shaft disposed at one side of the fastening body and rotatably connected to the fastening body and supported by the fastening body and having a fastening inserting portion of a reduced sectional area in a lower direction and having a fastening screw portion of a screw form in an end portion of a lower portion; a fastening motor disposed at an upper portion of the fastening shaft and connected to the fastening shaft to provide rotating power by operation; and a fastening cover disposed at an upper portion of the fastening body and having an opened lower portion while enclosing each of the fastening body, the fastening shaft, and the fastening motor, wherein the fastening body may be installed in one or in plural according to a kind of power such as a single-phase AC, DC, and multiple-phase AC supplied from the power transmission cable, the fastening body may be connected to rotatably support the fastening shaft rotating by operation of the fastening motor and can supply power supplied from the power transmission cable to the connected fastening shaft, and the fastening screw portion of the fastening shaft may be inserted into the power reception device in a rotating direction by operation of the fastening motor to be screw-fastened to the power reception device and to release fastening to the power reception device

The power reception device may include: a power reception body separately disposed from one side of the ship and having the power reception cable disposed at a lower portion; a power reception connector disposed at the inside of the power reception body and connected to the power reception cable and having a power reception insertion hole to be inserted when being connected to the power transmission connecting device at the center and having an insertion screw portion of a screw form at an inside surface of the power reception insertion hole and provided in at least one; a power reception support body disposed at an upper portion of at least one power reception connector and having a sectional area enlarged to an upper portion and for supporting when fastened to the power transmission connecting device; and a power reception cover disposed at an upper portion of the power reception body and for enclosing the power reception connector and the power reception support body, wherein the power reception connector may be connected by the power reception cable to a location to which power is supplied, be screw-fastened by the insertion screw portion to the power transmission connecting device, and supply power supplied through the power reception cable to the power reception cable.

The power transmitting and receiving device may further include: an opening and closing body having an opening and closing portion having an opened portion to insert the power transmission connecting device at the power reception cover and disposed at the inside of the power reception cover and installed to open and close the opening and closing portion with an opened portion; an opening and closing rotation shaft disposed at the inside of the power reception cover and connected to open and close the opening and closing portion by a rotation to the inside of the opening and closing body; and an opening and closing motor disposed at the inside of the power reception cover and connected to provide power for rotating the opening and closing rotation shaft, wherein the opening and closing body may open and close the opening and closing portion for inserting the power transmission connecting device while rotating together with the opening and closing rotation shaft rotated by operation of the opening and closing motor.

The power transmitting and receiving device may further include a fixed structure disposed at a lower portion of the power reception body and for fixing the power reception body at an upper portion in a structure form fixed to the bottom of the sea.

To achieve the above objects, there is further provided a power transmitting and receiving device using a ship including: a power generation device disposed at the inside of the ship and for generating power by generation; a power transmission crane disposed at one side of the ship and protruded to preset one side of the outside of the ship; a power reception device separately disposed from one side of the ship and having a power reception cable wound to supply power supplied to the inside to the outside; and a drawn-out device disposed at one side of the power transmission crane and having a wire connected to the power reception cable wound in the power reception device through the power transmission crane to the power generation device and wound to be drawn-out in a direction of the power reception device, wherein in a state in which the ship is moved to a periphery of the power reception device, the drawn-out device may be positioned at an upper portion of the power reception device through the power transmission crane and be connected to the power reception cable wound in the power reception device, and in a state in which the power reception cable is drawn-out in a direction of the power generation device, the drawn-out device may be connected to the power reception cable and supply power generated in the power generation device to the outside through the drawn-out power reception cable.

The power generation device may include: a waste receiving chamber disposed at the inside of the ship and in which sea waste is loaded to supply as fuel of power generation; a generator disposed at the inside of the ship and positioned at one side of the waste receiving chamber and for receiving supply of sea waste, which is fuel to generate power by power generation; a rectifier installed between the generator and the power transmission cable and for rectifying to convert power generated in the generator to power that can transmit; and a power transmission connector disposed at one side of the rectifier and connected to the power reception cable to transmit power rectified in the rectifier, wherein the power generation device may generate power in the generator using the sea waste loaded in the waste receiving chamber as fuel at the inside of the moved ship, rectify the power to power to be transmitted with the rectifier, and be connected to a power transmission connector with the power reception cable drawn-out and connected to the drawn-out device to transmit power.

The power reception device may include: a power reception body separately disposed from one side of the ship and in which the other side of the power reception cable having one side connected to the outside is positioned in an upper direction of the inside; a power reception cable support body disposed at the inside of the power reception body and positioned at an upper portion of the power reception body and for supporting the power reception cable; a cable connector disposed at an end portion of the other side of the power reception cable and connected to the wire when drawing out the power reception cable with the drawn-out device; a power reception drum disposed at the inside of the power reception body and wound by multiple times with the power reception cable; a power reception winding motor connected at one side of the power reception drum and for providing drawn-out power while the power reception cable is unwound and wound according to a rotation of the power reception drum; and a power reception cover disposed at an upper portion of the power reception body and for enclosing the power reception cable support body and the power reception drum, wherein when the power reception cable may be fixed to the wire in a state wound by multiple times in the power reception drum, the power reception drum may be rotated by operation of the power reception winding motor and be drawn out to interlock with the drawn-out device while the power reception drum is unwound to be connected to the power generation device, and after transmission of power is terminated, the power reception cable may be wound by multiple times while the power reception drum is rotated by operation of the power reception winding motor to return to an original position while interlocking with the drawn-out device in a state in which connection to the power generation device is released, and in a state in which coupling to the wire is thus released, the power reception cable may be received at the inside of the power reception body.

The power transmitting and receiving device may further include: an opening and closing body having an opening and closing portion having an opened portion to insert the power transmission connecting device at the power reception cover and disposed at the inside of the power reception cover and installed to open and close the opening and closing portion having an opened portion; an opening and closing rotation shaft disposed at the inside of the power reception cover and connected to open and close the opening and closing portion by a rotation to the inside of the opening and closing body; and an opening and closing motor disposed at the inside of the power reception cover and connected to provide power for rotating the opening and closing rotation shaft, wherein the opening and closing body may open and close the opening and closing portion for inserting the power transmission connecting device while rotating together with the opening and closing rotation shaft rotated by operation of the opening and closing motor.

The power transmitting and receiving device may further include a fixed structure disposed at a lower portion of the power reception body and for fixing the power reception body at an upper portion in a structure form fixed to the bottom of the sea.

The drawn-out device may include: a wire support body disposed at an end portion of one side of the outside of the power transmission crane and for supporting to maintain a position at which the wire is inserted into the power reception device; a drawn-out connector disposed at an end portion of one side of the wire and inserted into the power reception cable connector and fixed to the power reception cable connector when the power reception cable is drawn-out and having an elastic support body for fixing the power reception cable connector and releasing fixing of the power reception cable connector while being moved by elasticity at the inserted and fixed one side; a drawn-out cover disposed at an end portion of one side of the outside of the power transmission crane and for enclosing the wire support body; a wire drum disposed at one side of the power transmission crane and for winding the wire supported by the wire support by multiple times; and a wire winding motor connected at one side of the wire drum and connected to the power reception cable and for providing drawn-out power while the wire is unwound and wound according to a rotation of the wire drum, wherein in a state in which the wire is wound in the wire drum by multiple times, when the wire is fixed to the power reception cable with operation of the power transmission crane, the wire may be wound while be interlocked with the power reception device by operating the wire winding motor, and the power reception cable may be drawn out to connect to the power generation device, after transmission of power is terminated, while the wire drum is rotated with operation of the wire winding motor while be interlocked with the power reception device in a state in which a connection to the power generation device is released, the wire may be unwound and maintain a state supported by the wire support body, which is an upper position of the power reception device, and when the power reception cable is connected to the wire support body, while the elastic support body is opened, the wire support body may be inserted into the elastic support body and be fixed to the elastic support body and thus the wire and the power reception cable may be together drawn-out, and when the wire support body is returned to an original position, while the wire is latched to the wire support body, the elastic support body may be opened and thus fixing of the wire and the power reception cable may be released.

The power transmission crane may include: a crane strut fixed to one side of the ship and protruded to an upper portion; a crane arm having one side protruded to the crane strut and protruded to one side of the outside to be supported to adjust an angle thereof to the crane strut; and a cable support body disposed at the inside of the crane strut and for supporting the wire positioned at the crane arm side through the crane strut and the power transmission cable connected to the wire, wherein the power reception cable may be drawn out in a state connected to the wire supported by the cable support body, be connected to the power generation device via the crane strut and the crane arm while being supported by the cable support body together with the wire, and supply power to the outside.

The crane strut may include: a lower strut fixed to one side of the ship and provided in a strut shape in an upper direction at one side of the ship; an upper strut disposed at an upper portion of the lower strut and separated from the lower strut to be supported by the crane arm; a vertical transfer device disposed between the lower strut and the upper strut and for vertically transferring the upper strut, wherein the upper strut may be vertically moved from the lower strut fixed to the ship by operation of the vertical transfer device.

The crane arm may include: an arm body disposed in plural at one side of the crane strut and extended toward one side in an overlapped state; and extensible devices each disposed in an overlapped lower portion of the plurality of arm bodies and for moving to extend and press the overlapped arm body in one side direction, wherein the arm bodies may be extended and retracted to move the drawn-out device disposed at one side in a direction of the power reception device by operation of the extensible device when the arm bodies are fastened to the power reception device, and the arm bodies may be pressed in a direction of the crane strut by operation of the extensible device, when power supply to the power reception device is complete.

The extensible device may include: extensible gears each disposed at an upper portion of the plurality of arm bodies and provided in a rack gear form with a preset length to move in one side direction of the outside in which the arm bodies are moved; moving gear bodies each disposed at an upper portion of the extensible gear and gear-coupled to the extensible gear to be provided in a pinion gear form to move together with the extensible gear and the arm body by a rotation; and extensible motors connected to the moving gear body and each positioned at one side of the plurality of arm bodies and for providing power for rotating the moving gear body, wherein the plurality of arm bodies each may be moved together with the extensible motor while the moving gear body rotates by operation of the extensible motor installed at each arm body to be extended and retracted on a step basis.

### Advantageous effects

According to an exemplary embodiment of the present invention, a power generation device is installed in a ship, and a power transmission device for transmitting power generated in the power generation device from the ship to an island or coast region is installed and thus while the ship moves, and as the power transmission device supplies power generated by generation to the island or coast region, power supply efficiency is improved.

Further, the power generation device installed in the ship collects sea waste, generates power using the waste as fuel, collects waste that contaminates the sea, and recycles the waste as a resource and thus resource recycling efficiency is improved.

In the ship, a power transmission device connected to the power generation device to supply power to a preset outside position of the ship is installed, and the power transmission device is connected to supply power to the sea adjacent to an island or coast region, and by operating the power transmission device, the power generation device is connected to the power transmission device, and as power is supplied, in a state in which the ship does not come alongside the island or coast region, as power can be supplied, power supply efficiency is improved, and as a power reception device installed to adjacent sea is connected to a plurality of island or coast regions, power can be transmitted to several locations with power transmission of one time and thus efficiency of power transmission can be improved.

Further, the power transmission device is vertically transferred to be inserted at the inside of a ship, and as a transmission line connected to the power generation device using a crane formed in a structure that can be extended and folded to a position to be transmitted power is transferred in a power reception device direction, when the ship runs, the crane is positioned at the inside of the ship to minimize interference upon running the ship, and when transmitting power, the crane is extended in a power reception direction to transmit power to a far distance and thus power transmission efficiency is improved.

Further, covers that are closed before the power transmission device and the power reception device are each connected at a connection position and that are opened when the power transmission device and the power reception device are each connected are each installed to prevent rainwater of rainy weather or seawater at bad weather of the high wind and waves from contacting with a connect portion of the power transmission device and the power reception device to which an electric current is applied and thus it is prevented from being short-circuited or discharged.

Further, when the power transmission device and the power reception device are connected, the power transmission device and the power reception device have a fastening structure and thus at the sea, in a state in which the power transmission device and the power reception device are moved according to a size of the wind and waves, when transmitting power generated in the power generation device, a connection of the power transmission device and the power reception device is prevented from being interrupted, and as the power transmission device and the power reception device are securely fixed by fastening, it is prevented from being short-circuited or discharged due to a gap in a connection of the power transmission device and the power reception device.

### Brief Description of the Drawings

FIG. 1 is a perspective view illustrating a running state of a ship in a device for transmitting and receiving power using a ship according to an exemplary embodiment of the present invention.

FIG. 2 is a perspective view illustrating a state in which a ship approaches a power reception device in the device for transmitting and receiving power using a ship of FIG. 1.

FIG. 3 is a perspective view illustrating a state in which a power transmission crane is extended to the power reception device side in the device for transmitting and receiving power using a ship of FIG. 1.

FIG. 4 is a perspective view illustrating a state in which a power transmission connecting device and a power reception device are connected to transmit power in the device for transmitting and receiving power using a ship of FIG. 1.

FIG. 5 is a partially cut-away perspective view illustrating a major portion of a receiving crane in the device for transmitting and receiving power using a ship of FIG. 1.

FIG. 6 is a partially cut-away perspective view illustrating a state in which a receiving crane is extended in the device for transmitting and receiving power using a ship of FIG. 1.

FIG. 7 is a partially cut-away front view illustrating a state in which a receiving crane is extended and retracted in the device for transmitting and receiving power using a ship of FIG. 1.

FIG. 8 is a perspective view illustrating a power transmission connecting device, which is a major portion in the device for transmitting and receiving power using a ship of FIG. 1.

FIG. 9 is a perspective view illustrating a power reception device, which is a major portion in the device for transmitting and receiving power using a ship of FIG. 1.

FIG. 10 is a front view illustrating a power reception cover opening and closing state of a power reception device, which is a major portion in the device for transmitting and receiving power using a ship of FIG. 1.

FIG. 11 is a diagram illustrating a state in which a power transmission connecting device of the device for transmitting and receiving power using a ship of FIG. 1 is positioned in an upper portion of a power reception device.

FIG. 12 is a diagram illustrating a state in which a power transmission connecting device of the device for transmitting and receiving power using a ship of FIG. 1 is fastened to a power reception device.

FIG. 13 is a diagram illustrating a state in which a power transmission connecting device of the device for transmitting and receiving power using a ship of FIG. 1 is fastened to a power reception device.

FIG. 14 is a diagram illustrating a state in which a power transmission connecting device of the device for transmitting and receiving power using a ship of FIG. 1 is released from fastening to a power reception device.

FIG. 15 is a perspective view illustrating an operation state of a device for transmitting and receiving power using a ship according to another exemplary embodiment of the present invention.

FIG. 16 is a partially cut-away perspective view illustrating a major portion of the device for transmitting and receiving power using a ship of FIG. 15.

FIG. 17 is a diagram illustrating a state in which a drawn-out device of the device for transmitting and receiving power using a ship of FIG. 15 is positioned in an upper portion of a power reception device.

FIG. 18 is a diagram illustrating a state in which a drawn-out device and a power reception device of the device for transmitting and receiving power using a ship of FIG. 15 are fixed.

FIG. 19 is a diagram illustrating a state in which a power reception cable of the device for transmitting and receiving power using a ship of FIG. 15 is drawn-out to a drawn-out device.

FIG. 20 is a diagram illustrating a state in which a power reception cable of the device for transmitting and receiving power using a ship of FIG. 15 is connected to a generator.

<Description of Reference Numerals Indicating Primary Elements in the Drawings>

10: ship 11: crane reception space

100: power transmitting and receiving device 110: power generation device

111: generator 112: waste receiving chamber

113: power transmission cable 114: rectifier

115: power transmission connector 120: power transmission crane

121: crane strut 121a: upper strut

121b: lower strut 122: vertical transfer device

123: crane arm 124: arm body

125: cable support body 126: extensible device

126a: extensible gear 126b: moving gear body

126c: extensible motor 130: power transmission connecting device

131: fastening body 132: shaft support

133: fastening shaft 134: fastening inserting portion

135: fastening screw portion 136: fastening motor

137: fastening cover 140: power reception device

141: power reception body 142: power reception connector

142a: power reception insertion hole 142b: insertion screw portion

143: power reception support body 144: power reception cover

144a: opening and closing portion 144b: opening and closing body

145: opening and closing device 145a: opening and closing rotation shaft

145b: opening and closing motor 146: power reception cable

147: power reception cable support body 148: cable connector

149: power reception drum 149a: power reception winding motor

150: fixed structure 160: drawn-out device

161: wire support body 162: wire

163: drawn-out connector 164: elastic support body

165: drawn-out cover 166; wire drum

167: wire winding motor

### Best modes for carrying out the invention

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. Like reference numerals designate like elements throughout the specification.

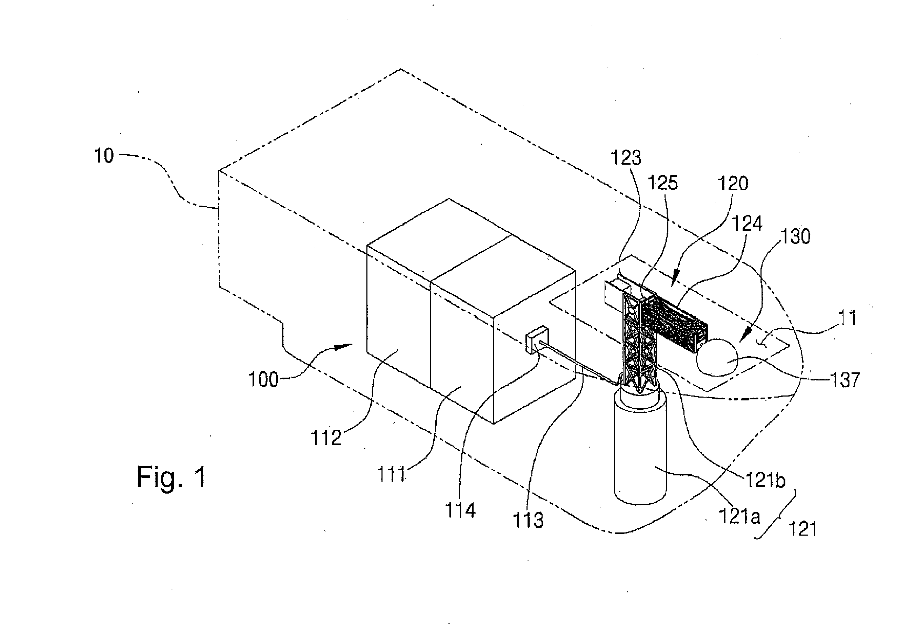

Hereinafter, a configuration in which a power transmitting and receiving device using a ship is installed according to an exemplary embodiment of the present invention will be described with reference to FIGS. 1 to 14.

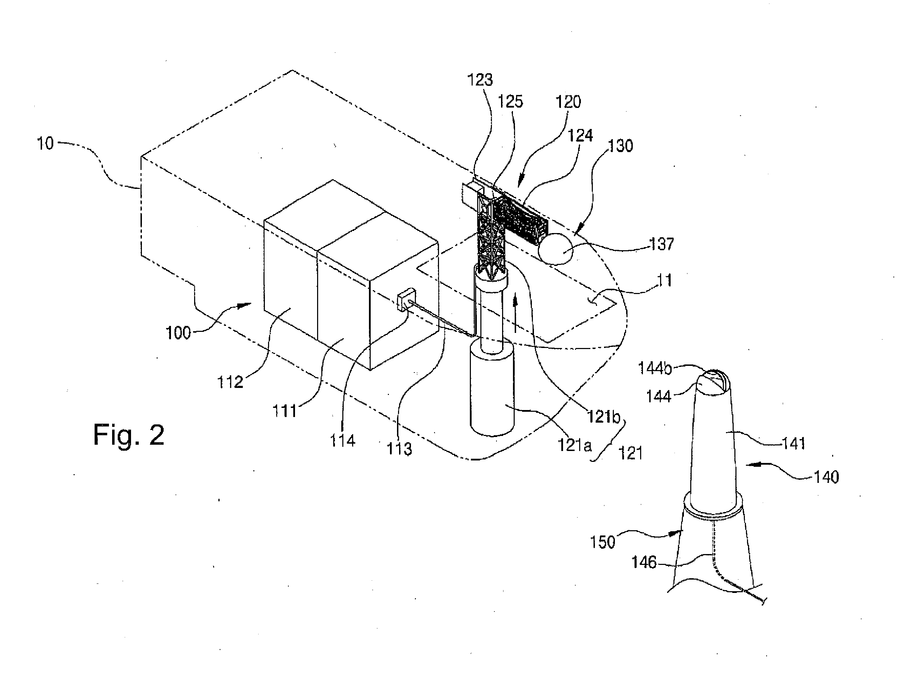

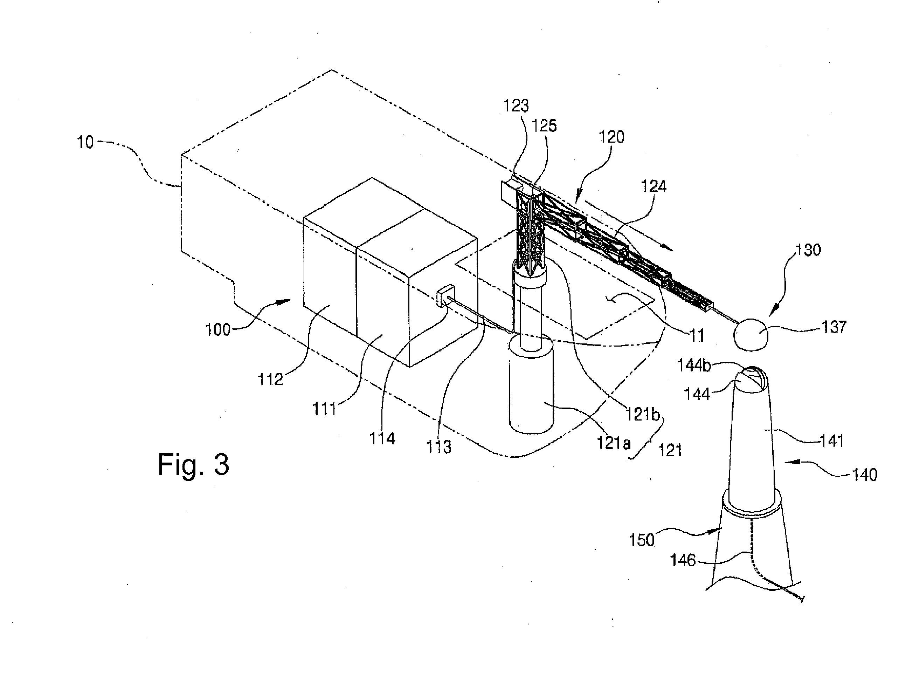

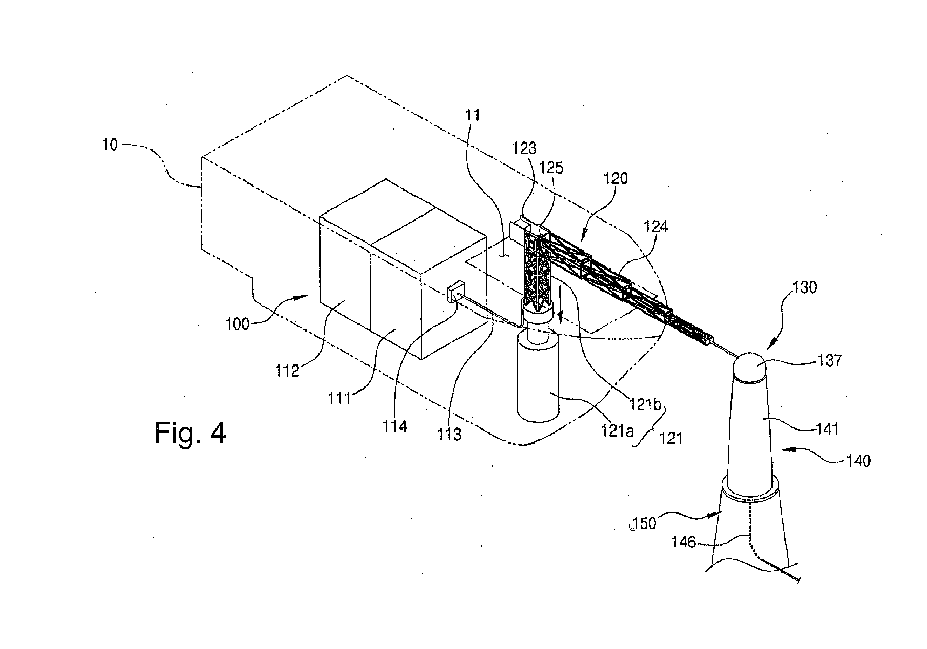

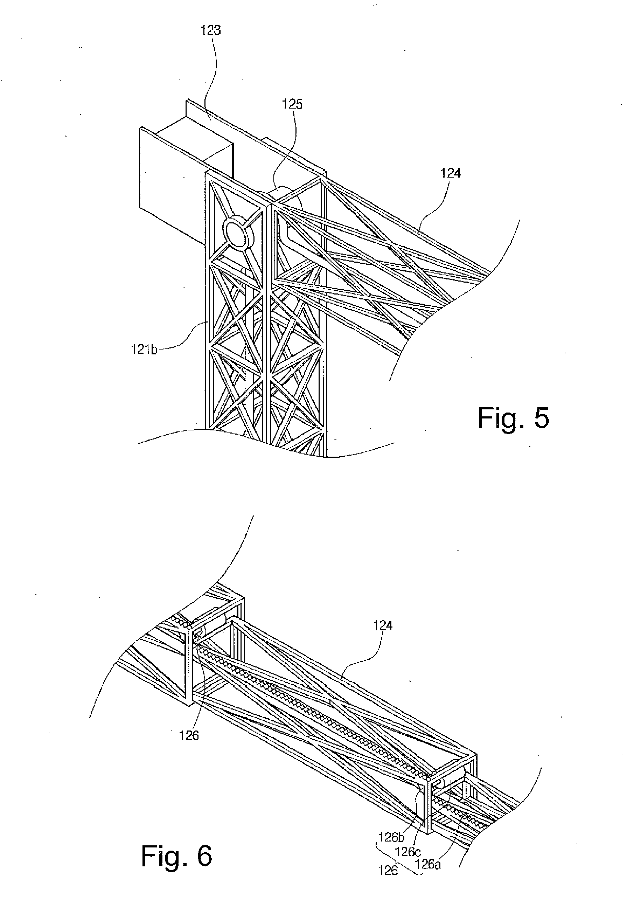

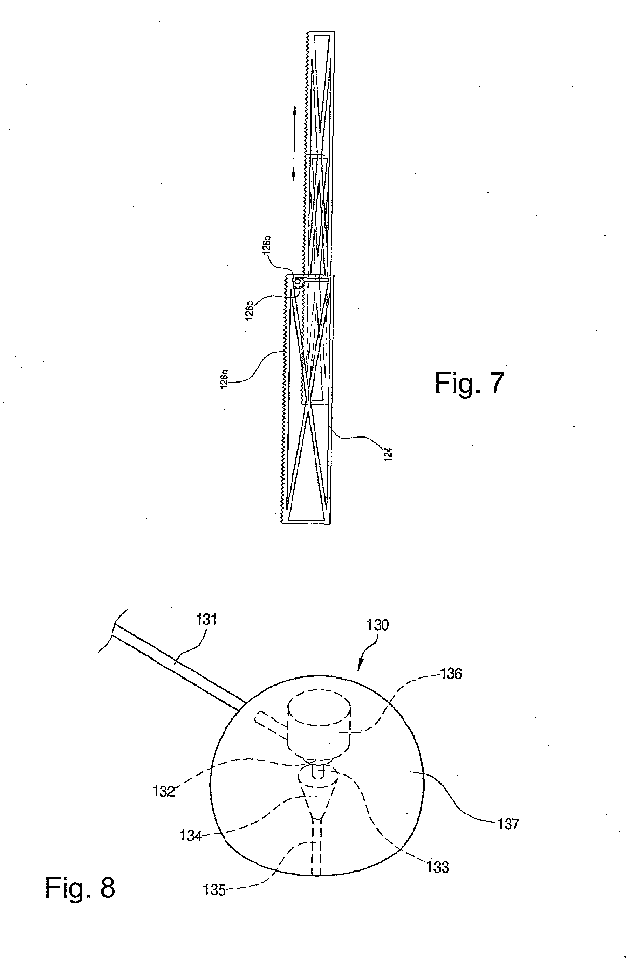

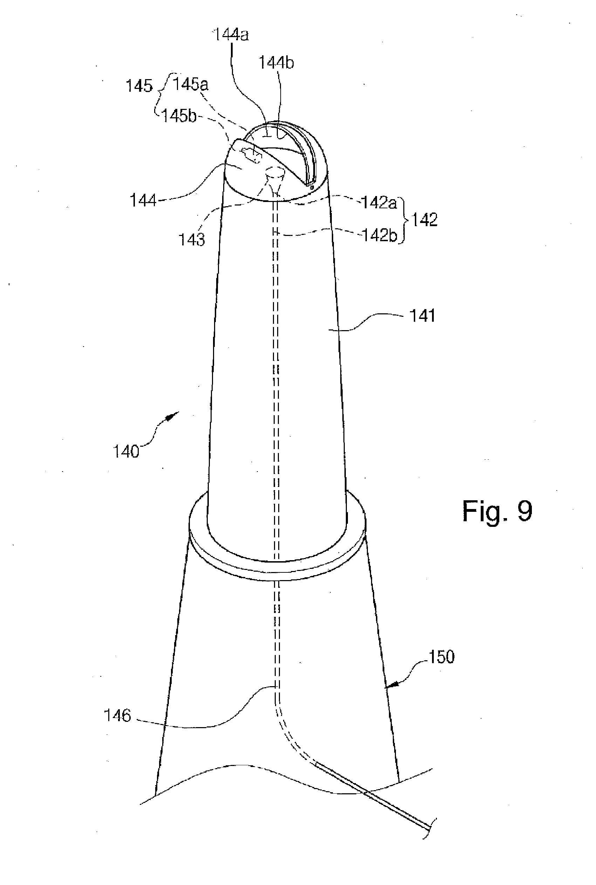

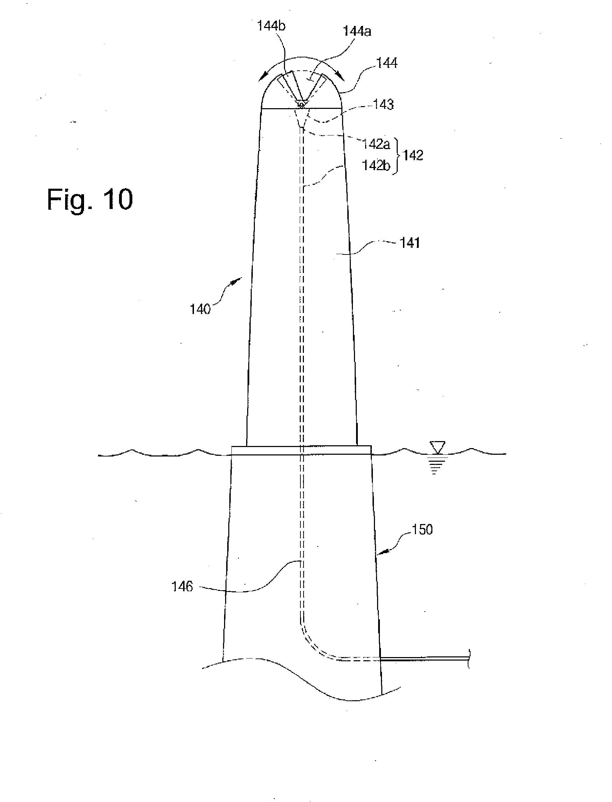

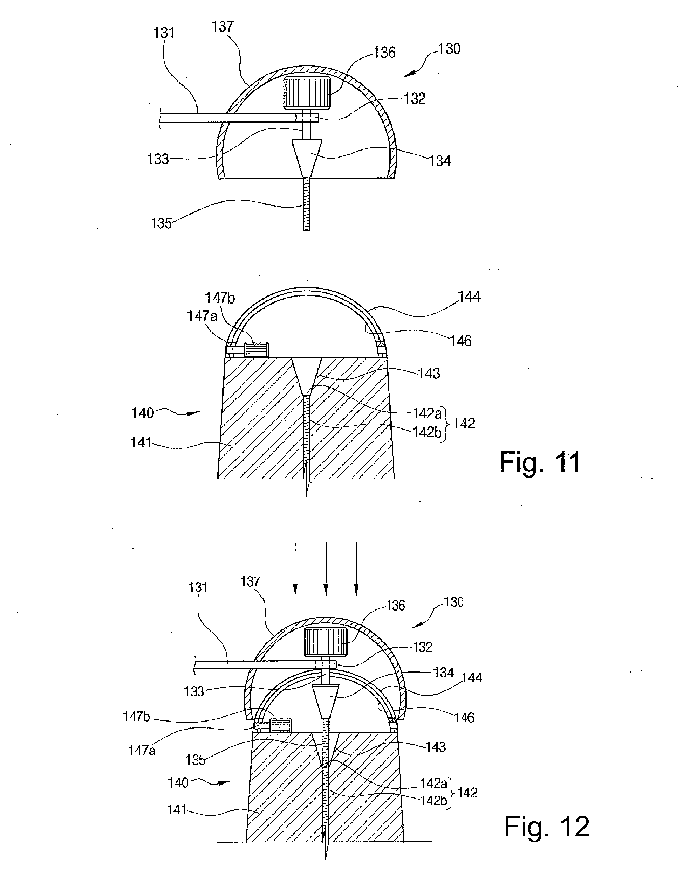

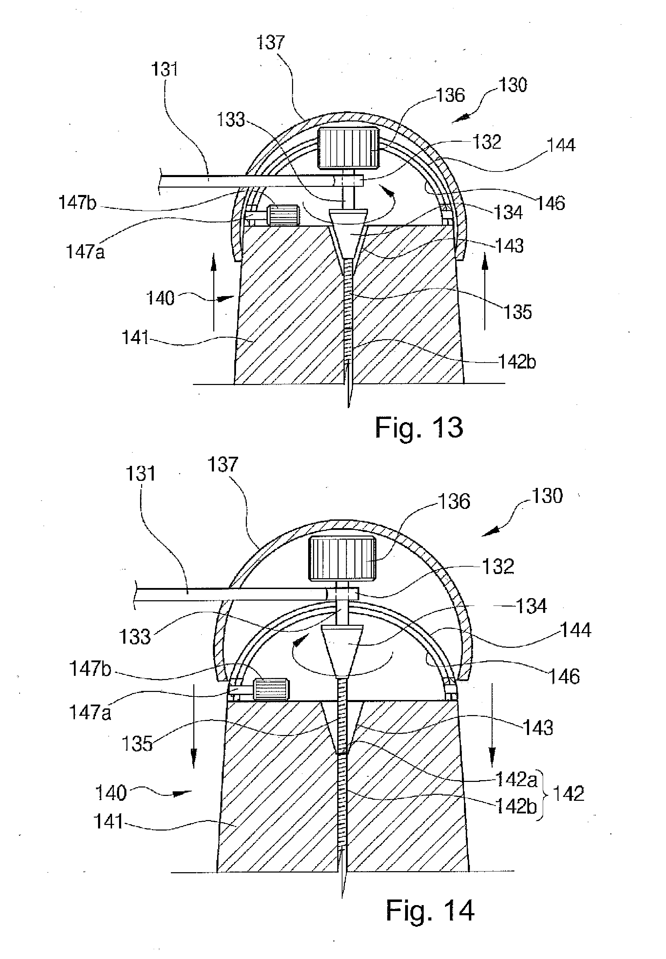

FIG. 1 is a perspective view illustrating an running state of a ship in a device for transmitting and receiving power using a ship according to an exemplary embodiment of the present invention, FIG. 2 is a perspective view illustrating a state in which a ship approaches a power reception device in the device for transmitting and receiving power using a ship of FIG. 1, FIG. 3 is a perspective view illustrating a state in which a power transmission crane is extended to the power reception device side in the device for transmitting and receiving power using a ship of FIG. 1, FIG. 4 is a perspective view illustrating a state in which a power transmission connecting device and a power reception device are connected to transmit power in the device for transmitting and receiving power using a ship of FIG. 1, FIG. 5 is a partially cut-away perspective view illustrating a major portion of a receiving crane in the device for transmitting and receiving power using a ship of FIG. 1, FIG. 6 is a partially cut-away perspective view illustrating a state in which a receiving crane is extended in the device for transmitting and receiving power using a ship of FIG. 1, FIG. 7 is a partially cut-away front view illustrating a state in which a receiving crane is extended and retracted in the device for transmitting and receiving power using a ship of FIG. 1, FIG. 8 is a perspective view illustrating a power transmission connecting device, which is a major portion in the device for transmitting and receiving power using a ship of FIG. 1, FIG. 9 is a perspective view illustrating a power reception device, which is a major portion in the device for transmitting and receiving power using a ship of FIG. 1, FIG. 10 is a front view illustrating a power reception cover opening and closing state of a power reception device, which is a major portion in the device for transmitting and receiving power using a ship of FIG. 1, FIG. 11 is a diagram illustrating a state in which a power transmission connecting device of the device for transmitting and receiving power using a ship of FIG. 1 is positioned in an upper portion of a power reception device, FIG. 12 is a diagram illustrating a state in which a power transmission connecting device of the device for transmitting and receiving power using a ship of FIG. 1 is fastened to a power reception device, FIG. 13 is a diagram illustrating a state in which a power transmission connecting device of the device for transmitting and receiving power using a ship of FIG. 1 is fastened to a power reception device, and FIG. 14 is a diagram illustrating a state in which a power transmission connecting device of the device for transmitting and receiving power using a ship of FIG. 1 is released from fastening to a power reception device.

Referring to FIGS. 1 to 14, a power transmitting and receiving device 100 using a ship according to an exemplary embodiment of the present invention includes a power generation device 110, a power transmission crane 120, a power transmission connecting device 130, a power reception device 140, and a fixed structure 150. Here, the power generation device 110, the power transmission crane 120, and the power transmission connecting device 130 are installed at a ship 10, and the power reception device 140 is installed at the sea adjacent to an island or coast region to which power is supplied. At the inside of the ship 10, the power generation device 110 is installed, and at one side thereof, crane reception space 11, which is space in which the power transmission crane 120 and the power transmission connecting device 130 are installed and in which an upper portion is opened is formed.

The power generation device 110 includes a generator 111, a waste receiving chamber 112, a power transmission cable 113, and a rectifier 114 disposed at the inside of the ship 10. The generator 111 is installed at the inside of the ship 10 and generates power by combustion of injected fuel. The generator generates power by generation at the inside of the ship 10 moving at the sea and thus even when the ship 10 moves, by operating the generator 111, power can be generated. Here, the generator 111 may use entire generators 111 that generate power and a detailed description thereof will be omitted.

The waste receiving chamber 112 is disposed at the inside of the ship 10 and is positioned at one side of the generator 111. The waste receiving chamber 112 receives sea waste to be used as fuel of the generator 111 therein and continues to supply the received sea waste to the generator, thereby generating power. That is, as sea waste is supplied as fuel to generate power by generation, the generator 111 may recycle sea waste that contaminates sea as a resource.

One side of the power transmission cable 113 is connected to the generator 111, and the other side thereof is supported by a crane arm 123 and is connected to the power transmission connecting device 130. The power transmission cable 113 is connected to supply power generated in the generator 111 toward the power transmission connecting device 130. The power transmission cable 113 is connected to supply power generated in the generator 111 to the power transmission connecting device 130.

The rectifier 114 is installed between the generator and the power transmission cable to rectify and supply the kind of power generated in the generator 111 to the kind of power supplied from the power reception device 140. That is, the kind of a current is divided into DC having polarity and AC having no polarity, and as AC having a small capacity, a single-phase current having one connection line exists, and as AC having a large capacity, three-phase AC having three connection lines and five-phase AC having five connection lines exists, and single-phase AC or multiple-phase AC may be supplied. Accordingly, a kind of power generated in the generator 111 is a kind of power supplied from the power reception device 140, and as the power is rectified and supplied in the rectifier 114, even if a transformer and a rectifier that convert a kind of power are not installed in the power reception device 140, necessary power may be received. As described above, as the rectifier 114 rectifies a kind of power generated in the generator 111 to a kind of power supplied from the power reception device 140, after the power reception device 140 is connected, transmitted power may be immediately used.

The power transmission crane 120 includes a crane strut 121, a vertical transfer device 122, a cable support body 125, and a crane arm 123 installed at one side of the ship 10. The crane strut 121 is installed at one side of the ship 10 and is provided in a strut form. The crane strut 121 is installed at the inside of the crane reception space 11 of the ship 10 and supports the power transmission cable 113 connected to the power transmission connecting device 130 therein. In order to vertically move, the crane strut 121 is separated at the center, and in an upper portion thereof, an upper support 121a is provided, and in a lower portion thereof, a lower support 121b is provided. That is, in order to vertically move, in the crane strut 121, the upper support 121a moving to an upper portion and the lower support 121b supported in a lower portion are installed in a separated state.

The vertical transfer device 122 is disposed at the center of the crane strut 121 and adjusts a vertical length of the crane strut 121 installed at the crane reception space 11 by operation. The vertical transfer device 122 is installed between the upper strut 121a and the lower strut 121b and provides power that vertically moves the upper strut 121a by operation. That is, as a height of the crane strut 121 installed in the crane reception space 11 may be adjusted by the vertical transfer device 122, while the ship 10 runs, the power transmission crane 120 maintains a declined state to receive in the crane reception space 11, and when transmitting power, the power transmission crane 120 is moved upward and performs a power transmission work. Here, in this specification, the vertical transfer device 122 is illustrated in a fluid pressure cylinder form, but this is provided for convenience of description. The vertical transfer device 122 includes an entire device that vertically transfers the crane strut 121.

The cable support body 125 is disposed at the inside of the crane strut 121 and is installed to support the power transmission cable 113 positioned at the inside. In order to support the power transmission cable 113 that connects the generator 111 and the power transmission connecting device 130, the cable support body 125 is installed at the inside of the crane strut 121.

The crane arm 123 is disposed at an upper portion of the crane strut 121 and is protruded in one side direction. The crane arm 123 is protruded in one side direction and is supported by the crane strut 121 to move in a direction of the power reception device 140 positioned at the outside of the ship 10. At an end portion of one side of the crane arm 123, the power transmission connecting device 130 is installed, and at the inside thereof, the power transmission cable 113 supported by the crane strut 121 is connected to the power transmission connecting device 130. The crane arm 123 maintains a fold state when the ship 10 runs and is spread to be extended to a position of the power reception device 140 when the power transmission connecting device 130 moves.

The crane arm 123 includes a plurality of arm bodies 124 overlapped each other, and an extensible device 126. The arm body 124 is supported by the crane strut 121 and is provided in plural to be overlapped each other. An area of the plurality of arm bodies 124 reduces on a step basis from a direction of the crane strut 121 to one side direction, and while the plurality of arm bodies 124 are inserted into an arm body 124 of a direction of the crane strut 121 on a step basis, the arm bodies 124 are overlapped each other. The plurality of arm bodies 124 overlapped each other are extended while being spread on a step basis according to a position of the power reception device 140. That is, the arm body 124 is provided in plural to maintain an overlapped state to minimize rocking according to moving of the ship 10 when the ship 10 runs, and when transmitting power, while the arm body 124 is spread, the arm body 124 moves the power transmission connecting device 130 in a direction of the power reception device 140.

The extensible devices 126 are each disposed in an overlapped upper portion of the plurality of arm bodies 124 and provide overlapping and extending power of the arm bodies 124. The plurality of arm bodies 124 are moved to be overlapped or extended on a step basis by operation of the extensible device 126 each installed in the plurality of arm bodies 124. The extensible device 126 includes an extensible gear 126a, a moving gear body 126b, and an extensible motor 126c. The extensible gear 126a is provided in a rack gear form at one side of an upper portion of each arm body 124 inserted at the inside when overlapped among the plurality of arm bodies 124.

The moving gear body 126b is positioned at the inside of each arm body 124 positioned at the outside in which the arm bodies 124 overlapped or extended on a step basis are inserted when overlapped among the plurality of arm bodies 124 and is gear-couple to the extensible gear 126a in a pinion gear form. The moving gear body 126b is gear-coupled to the extensible gear 126a and is moved so that the plurality of arm bodies 124 are overlapped and extended by a rotation.

The extensible motor 126c is installed at the inside of the each arm body 124 positioned at the outside into which the overlapped and extended arm bodies 124 are inserted and are connected to the extensible gear 126a to provide rotating power. When the extensible motor 126c is driven, while the moving gear body 126b rotates, each arm body 124 overlapped and extended having the gear coupled extensible gear 126a may be moved in a rotating direction.

That is, when the ship 10 runs, while the moving gear body 126b is rotated by operation of the extensible motor 126c, each arm body 124 gear-coupled to the extensible gear 126a is moved to overlap and thus as a protrusion length thereof is reduced, rocking of the arm body 124 is reduced according to movement of the ship 10.

Further, when transmitting power, while the moving gear body 126b rotates in a direction in which the arm body 124 is extended by operation of the extensible motor 126c, the power transmission connecting device 130 disposed at an end portion of one side of each arm body 124 may be extended to move to a position of the power reception device 140.

The power transmission connecting device 130 includes a fastening body 131, a fastening shaft 133, a fastening motor 136, and a fastening cover 137 disposed at an end portion of one side of the crane arm 123. At least one fastening body 131 is disposed at an end portion of one side of the crane arm 123 and is connected to the power transmission cable 113 positioned at the inside of the crane arm 123. At an end portion of one side of the fastening body 131, a shaft support 132 rotatably connected to the fastening shaft 133 is formed. The fastening body 131 connects the power transmission cable 113 and the fastening shaft 133, rotatably connects and supports the fastening shaft 133, and transfers power transmitted from the power transmission cable 113 to the fastening shaft 133. The fastening body 131 disposed with at least one is provided with at least one according to a kind of power transmitted from the rectifier to the power reception device 140. That is, when a kind of transmitted power is single-phase AC, one power transmission cable 113 should be provided, and when a kind of transmitted power is DC, two power transmission cables 113 should be provided, when a kind of transmitted power is three-phase AC, three power transmission cables 113 should be provided, and when a kind of transmitted power is five-phase AC, five power transmission cables 113 should be provided and thus the fastening body 131 connected thereto is provided with a quantity according to a kind of power and is fastened to efficiently transmit power according to a kind of power. Further, the fastening shaft 133 and the fastening motor 136 are each disposed at the fastening body 131 and are provided with the same quantity as that of the fastening body 131.

The fastening shaft 133 is disposed at one side of the fastening body 131 and is rotatably supported by the fastening body 131. The fastening shaft 133 is rotatably supported by the fastening body 131 and is protruded in a lower direction to be fastened to the power reception device 140 in a state connected to the power transmission cable 113 when transmitting power. In a lower portion of the fastening shaft 133, a fastening inserting portion 134 inserted into the power reception device 140 while having a reducing sectional area is formed. As the fastening inserting portion 134 has a reducing sectional area in a lower direction, while the fastening shaft 133 is easily into the power reception device 140, after the fastening shaft 133 is inserted, the fastening inserting portion 134 is formed to be securely supported. In a lower end portion of the fastening shaft 133, a fastening screw portion 135 of a screw form is formed. When the fastening screw portion 135 is fastened to the power reception device 140, the fastening screw portion 135 is screw-coupled to be securely fixed while rotating in a direction in which the fastening shaft 133 is fastened, and when fastening is released, while the fastening shaft 133 is rotated in a direction in which fastening is released, fastening is easily released.

The fastening motor 136 is disposed at an upper portion of the fastening shaft 133 and is connected to the fastening shaft 133 to provide power in which the fastening shaft 133 rotates. The fastening motor 136 rotates the fastening shaft 133 in a fastening direction or a fastening release direction to operate to fasten the power reception device 140 and the fastening shaft 133. That is, the fastening screw portion 135 formed in a lower end portion of the fastening shaft 133 is fastened to the power reception device 140 and releases fastening to the power reception device 140 by a rotation of the fastening shaft 133 with operation of the fastening motor 136.

The fastening cover 137 encloses the fastening body 131, the fastening shaft 133, and the fastening motor 136, and a lower portion thereof is opened. In order to prevent the fastening body 131, the fastening shaft 133, and the fastening motor 136 to which power is transmitted at the sea from being short-circuited or discharged by a contact with power by injection of seawater scattered by the wind and waves or rainwater of rainy weather, the fastening cover 137 encloses the fastening body 131, the fastening shaft 133, and the fastening motor 136, and a lower portion of the fastening cover 137 is opened to fasten the fastening shaft 133 to the power reception device 140.

The power reception device 140 includes a power reception body 141, a power reception connector 142, a power reception support body 143, and a power reception cover 144 positioned separately from a ship. The power reception body 141 is installed at a periphery of a power supply location that supplies power at a position separated from the ship 10. That is, the power reception body 141 is installed at the sea adjacent to an island or coast region difficult to supply power and is connected to a power supply facility by the power reception cable 146 at the island or coast region.

The power reception cable 146 is installed at the bottom of the sea or on the sea to connect at least one island or coast region and the power reception device 140.

At least one power reception connector 142 is disposed at the inside of the power reception body 141 and has a penetrated power reception insertion hole 142a at the inside thereof, and the power reception cable 146 is connected to a lower portion thereof. The power reception connector 142 is disposed at the inside of the power reception body 141 and is installed to insert the fastening inserting portion 134 of the fastening shaft 133 positioned at an upper portion into the power reception insertion hole 142a formed at the inside and to support the fastening inserting portion 134 by the power reception insertion hole 142a by manipulation of the crane arm 123. When the fastening shaft 133 connected to the power transmission cable 113 is inserted into and is connected to the power reception connector 142, the power reception connector 142 transmits power generated in the power generation device 110 to the power reception cable 146 through the fastening shaft 133, and the transmitted power is transmitted to a position at which power is supplied at an island or coast region through the power reception cable 146. At the inside of the power reception insertion hole 142a, when an insertion screw portion 142b of a screw form is inserted into the fastening shaft 133, the insertion screw portion 142b is formed to screw-couple to the fastening screw portion 135. While the fastening shaft 133 is rotated by operation of the fastening motor 136, the fastening shaft 133 is fastened to the power reception connector 142 or releases fastening to the power reception connector 142. That is, when power is transmitted, while the fastening shaft 133 is rotated in a fastening direction by operation of the fastening motor 136, the fastening shaft 133 is inserted into the power reception insertion hole 142a of the power reception connector 142, and while the fastening screw portion 135 of the inserted fastening shaft 133 is fastened to the insertion screw portion 142b, power is transmitted in a securely fixed state, and when transmission of power is complete, while the fastening shaft 133 is rotated in a direction in which fastening is released by operation of the fastening motor 136, fastening of the fastening shaft 133 and the power reception connector 142 is released and thus the fastening shaft 133 is returned to an original position.

The power reception connector 142 is provided in one or in plural according to a quantity of the fastening shaft 133 each provided in the fastening body 131 provided in one or in plural according to a kind of power and is provided to fasten each fastening shaft 133.

The power reception support body 143 is disposed at an upper portion of the power reception connector 142 and is provided to enlarge a sectional area in an upper direction. The power reception support body 143 is provided to enlarged a sectional area of a corresponding shape in an upper direction to perform a surface contact with the fastening inserting portion 134 having a reduced sectional area in a lower portion inserted into and fastened to the power reception connector 142, thereby improving a support force of the fastening shaft 133 inserted into the power reception connector 142.

The power reception cover 144 is disposed at an upper portion of the power reception body 141 and encloses the power reception connector 142 and the power reception support body 143 provided at the inside of the power reception body 141. The power reception cover 144 encloses an upper portion to prevent seawater by the wind and waves of the power reception body 141 floating on the sea and rainwater of rainy weather from contacting with the power reception connector 142 and the power reception support body 143.

At the center of the power reception cover 144, an opening and closing portion 144a opened to insert the fastening shaft 133 is formed. At the inside of the power reception cover 144, an opening and closing body 144b for opening and closing the opening and closing portion 144a by a rotation is provided. The opening and closing body 144b is provided in a size to close the opening and closing portion 144a and opens and closes the opening and closing portion 144a by a rotation. At the inside of the power reception cover 144, an opening and closing device 145 for rotating the opening and closing body 144b is installed. The opening and closing device 145 rotates the opening and closing body 144b by operating to open and close the opening and closing portion 144a into which the fastening shaft 133 is inserted.

The opening and closing device 145 includes an opening and closing rotation shaft 145a and an opening and closing motor 145b rotatably axis-coupled to the inside of the opening and closing body 144b. The opening and closing rotation shaft 145a is disposed at the inside of the power reception cover 144, and the opening and closing body 144b is rotatably hinge-coupled to both sides of the power reception cover 144. The opening and closing body 144b is rotatably hinge-coupled to the power reception cover 144 by the opening and closing rotation shaft 145a and opens and closes the opening and closing portion 144a while being rotated about the opening and closing rotation shaft 145a.

The opening and closing motor 145b is disposed at the inside of the power reception body 141 and is connected to the opening and closing rotation shaft 145a provided at one side to provide power for rotating the opening and closing body 144b. The opening and closing motor 145b rotates together the opening and closing body 144b hinge-coupled to the power reception cover 144 by rotating the opening and closing rotation shaft 145a by operation, thereby opening and closing the opening and closing portion 144a. When transmitting power, by operating the opening and closing motor 145b, the opening and closing body 144b is rotated by a rotation of the opening and closing rotation shaft 145a and thus when the opening and closing portion 144a is opened, the fastening shaft 133 is inserted and in a state in which the fastening shaft 133 is fastened to the power reception connector 142, power is transmitted. Further, after power is transmitted, the fastening shaft 133 is transferred to an upper portion of the power reception cover 144, and by operating the opening and closing motor 145b, the opening and closing body 144b rotates by a rotation of the opening and closing rotation shaft 145a, and by closing the opening and closing portion 144a, seawater or rainwater can be prevented from being injected.

The fixed structure 150 is disposed from the bottom of the sea to a lower portion surface connected to the power reception body 141 and improves a fixing force by installing the fixed structure 150 using concrete and an iron frame. That is, as the power reception device 140 is installed at a region of a small water depth at a periphery of a coastline, which is an adjacent position of an island and seashore, the fixed structure 150 uplifted from the bottom of the sea like a common lighthouse is installed, and by installing the power reception device 140 at an upper portion of the fixed structure 150, a fixing force may be improved.

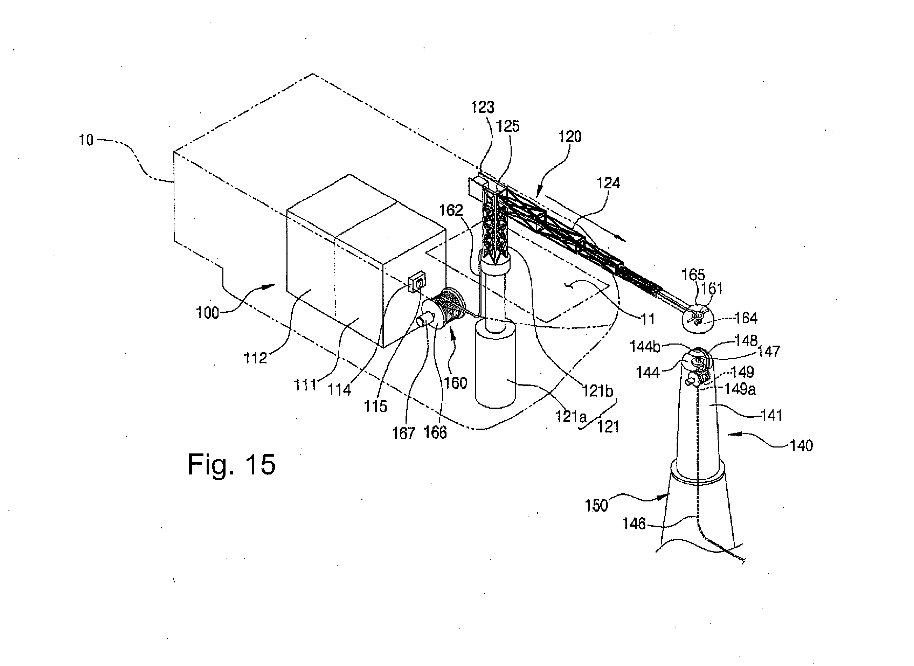

Hereinafter, a configuration of a power transmitting and receiving device using a ship according to another exemplary embodiment of the present invention will be described with reference to FIGS. 15 to 20.

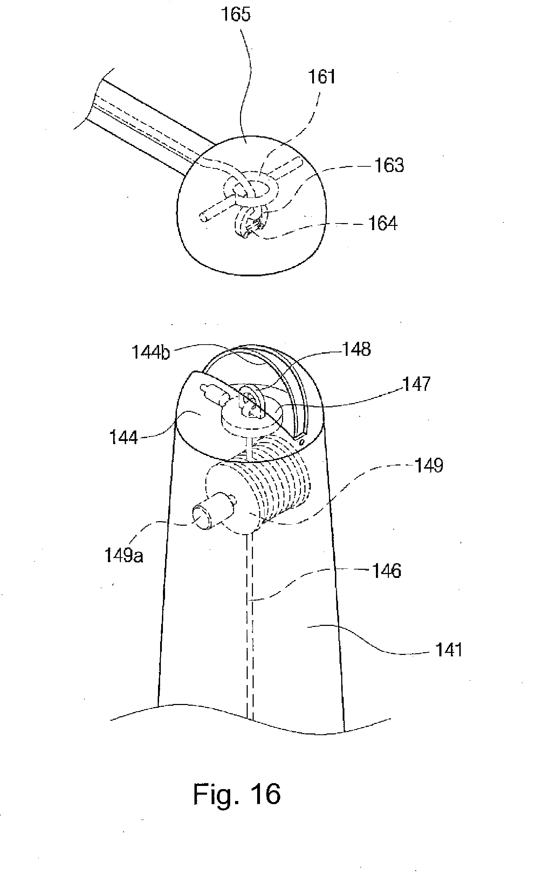

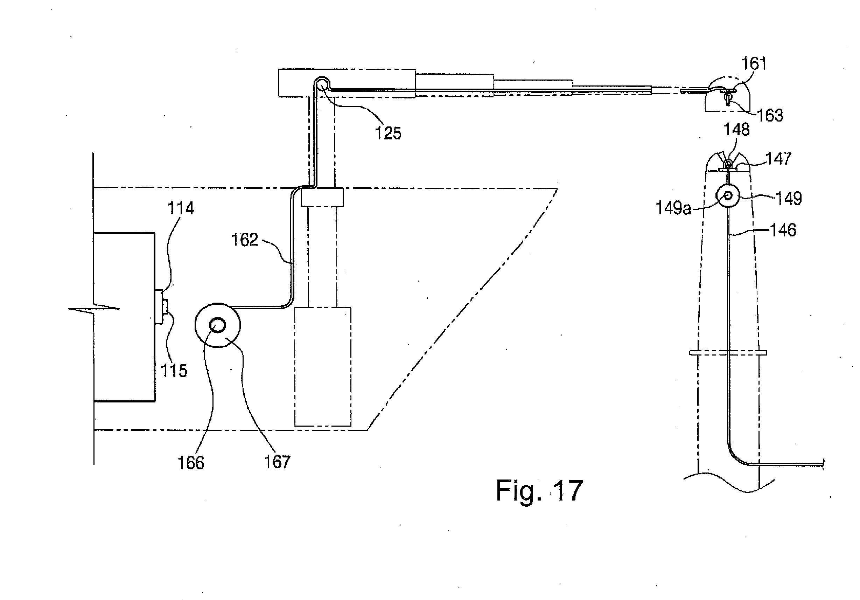

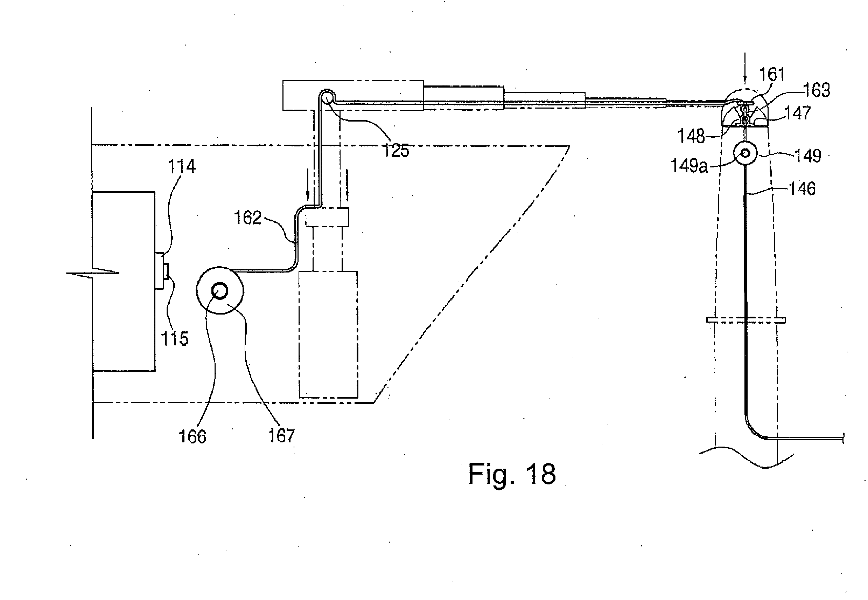

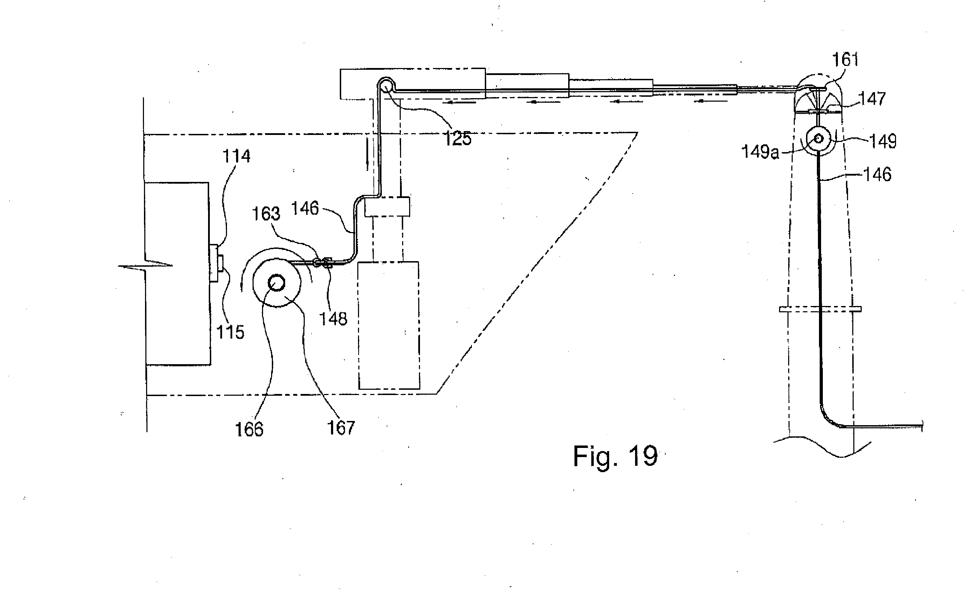

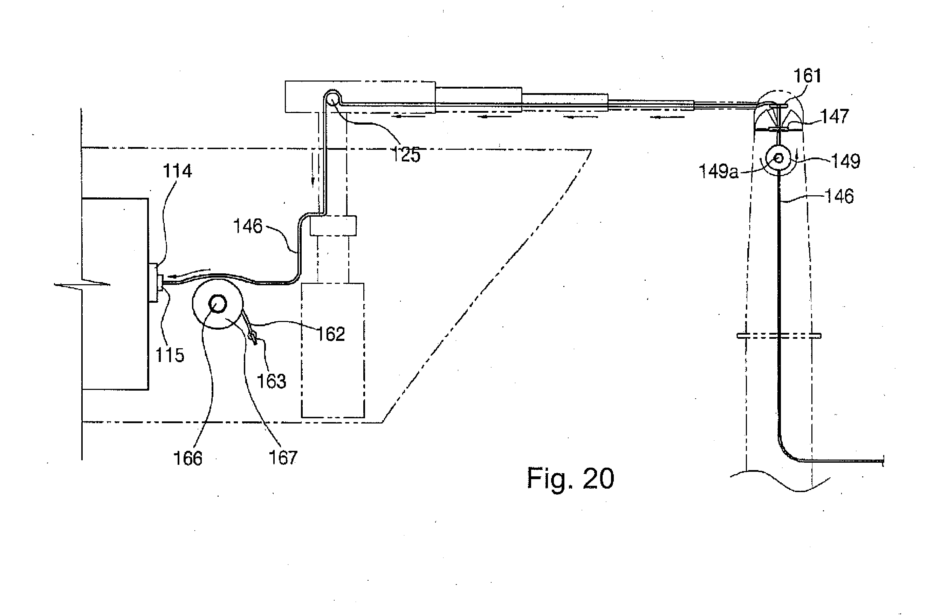

FIG. 15 is a perspective view illustrating an operation state of a device for transmitting and receiving power using a ship according to another exemplary embodiment of the present invention, FIG. 16 is a partially cut-away perspective view illustrating a major portion of the device for transmitting and receiving power using a ship of FIG. 15, FIG. 17 is a diagram illustrating a state in which a drawn-out device of the device for transmitting and receiving power using a ship of FIG. 15 is positioned in an upper portion of a power reception device, FIG. 18 is a diagram illustrating a state in which a drawn-out device and a power reception device of the device for transmitting and receiving power using a ship of FIG. 15 are fixed, FIG. 19 is a diagram illustrating a state in which a power reception cable of the device for transmitting and receiving power using a ship of FIG. 15 is drawn-out to a drawn-out device, and FIG. 20 is a diagram illustrating a state in which a power reception cable of the device for transmitting and receiving power using a ship of FIG. 15 is connected to a generator.

Referring to FIGS. 15 to 20, the power transmitting and receiving device 100 using a ship according to another exemplary embodiment of the present invention includes a power generation device 110, a power transmission crane 120, a power reception device 140, a drawn-out device 160, and a fixed structure 150 installed at a ship to generate power. Here, a configuration of the power transmission crane 120 and the fixed structure 150 and a partial configuration of the power generation device 110 and the power reception device 140 are substantially the same as those of the power transmitting and receiving device 100 using a ship described with reference to FIGS. 1 to 14 and therefore a detailed description thereof will be omitted.

The power generation device 110 includes a generator 111, a waste receiving chamber 112, a rectifier 114, and a power transmission connector 115. Here, a configuration of the generator 111, the waste receiving chamber 112, and the rectifier 114 is substantially the same as that of the power transmitting and receiving device 100 using a ship described with reference to FIGS. 1 to 14 and therefore a detailed description thereof will be omitted.

The power transmission connector 115 is provided at one side of the rectifier 114 and is installed to be connected to the power reception device 140 drawn-out from the drawn-out device 160. In order to connect power rectified by the rectifier 114 to the power reception device 140 drawn-out from the drawn-out device 160, the power transmission connector 115 is installed at one side of the rectifier 114.

The power reception device 140 includes a power reception body 141, a power reception cover 144, an opening and closing device 145, a power reception cable 146, a power reception cable support body 147, a cable connector 148, and a power reception drum 149 separately positioned from one side of the ship 1. Here, a configuration of the power reception body 141, the power reception cover 144, and the opening and closing device 145 is substantially the same as that of the power transmitting and receiving device 100 using a ship described with reference to FIGS. 1 to 14 and therefore a detailed description thereof will be omitted.

One side of the power reception cable 146 is disposed at the inside of the power reception body 141, and the other side thereof is connected to a location at which power is supplied at an island and coast region. In a state in which the ship 1 is positioned at a periphery of the power reception body 141, when the drawn-out device 160 operates, the power reception cable 146 positioned at the inside of the power reception body 141 is drawn out to be connected to the power transmission connector 115, and power rectified in the rectifier 114 is transmitted to the outside through the power reception cable 146. When power transmission is complete, in a state in which a connection of the power reception cable 146 and the power transmission connector 115 is released, the power reception cable 146 is returned to an original position, and after the power reception cable 146 is returned to an original position, while the ship 1 is moved, power can be supplied to another power reception device 140.

The power reception cable support body 147 is disposed at the inside of the power reception body 141 and is installed at a support position of the drawn-out power reception cable 146. The power reception cable support body 147 is installed at an upper portion of the inside of the power reception body 141 to be drawn-out to the drawn-out device 160 and supports the power reception cable 146 returned to an original position. That is, when drawing out the power reception cable 146 drawn-out to the drawn-out device 160, the power reception cable support body 147 supports the power reception cable 146 at a position coupled to the drawn-out device 160, and when the power reception cable 146 is returned to an original position, the power reception cable support body 147 supports the power reception cable 146 at an original position at which coupling is released.

The cable connector 148 is disposed at an end portion of one side of the power reception cable 146, and when drawing out the power reception cable 146, the cable connector 148 is formed in a shape connected to the drawn-out device 160. When the power reception cable 146 is drawn out to the drawn-out device 160 for power transmission, the cable connector 148 is fixed to the drawn-out device 160 and is drawn out together with the power reception cable 146, and after power is transmitted, in a state in which the cable connector 148 is returned to an original position, the cable connector 148 is installed to release fixing to the drawn-out device 160. Further, while the drawn-out device 160 moves upward or downward by operation of the power transmission crane 120, the cable connector 148 is fixed to the drawn-out device 160 and releases fixing to the drawn-out device 160.

The power reception drum 149 is disposed at the inside of the power reception body 141, and the power reception cable 146 winds the power reception drum 149 by multiple times in an approximate cylinder shape. In order to provide power that rotates the power reception drum 149, the power reception winding motor 149a is connected to one side of the power reception drum 149. When the power reception winding motor 149a operates, while the wound power reception cable 146 is wound or unwound in a rotating direction of the power reception drum 149, the power reception cable 146 is drawn-out and returned to an original position.

That is, when the power reception cable 146 is drawn out, in a state in which the power reception cable 146 supported by the power reception cable support body 147 by operation of the power transmission crane 120 is connected to the drawn-out device 160, the power reception cable 146 is drawn out while being unwound by a rotation of the power reception drum 149 by operation of the power reception winding motor 149a, and the drawn-out power reception cable 146 is connected to the power transmission connector 115 by the cable connector 148 to transmit power. Further, after transmission of power is terminated, in a state in which a connection of the power reception cable 146 from the power transmission connector 115 is released, when the power reception drum 149 rotates with operation of the power reception winding motor 149a, while the power reception cable 146 is wound, the power reception cable 146 is moved to an original position and is released from coupling to the drawn-out device 160 in a state in which the power reception cable 146 is supported by the power reception cable support body 147.

In this case, while the power reception cover 144 disposed at an upper portion of the power reception device 140 is open and closed by operation of the opening and closing device 145, the power reception cover 144 draws out the power reception cable 146 and returns the power reception cable 146 to an original position through an opening and closing portion 144a.

The drawn-out device 160 includes a wire support body 161, a wire 162, a drawn-out connector 163, a drawn-out cover 165, and a wire drum 166 disposed at an end portion of one side, which is an outside direction of the power transmission crane 120. The wire support body 161 is disposed at an end portion of an outside direction of a crane arm 123 of the power transmission crane 120 and is installed to support the wire 162. After the ship 1 is moved to a periphery of the power reception body 141, the wire support body 161 is installed at an end portion of one side of the outside moving to an upper portion of the power reception body 141 by operation of the power transmission crane 120. While the wire support body 161 is extended and retracted in a direction of the power reception body 141, the wire support body 161 is installed in an end portion of one side of the outside positioned at an upper portion of the power reception body 141 of the crane arm 123 of the vertical moving power transmission crane 120 and supports the wire 162 to position at an upper portion of the power reception cable 146. The wire support body 161 is installed to support the wire 162 at a position at which the wire 162 is coupled to the power reception cable 146 and is released from coupling of the power reception cable 146 and prevents the wire 162 from separating in a direction of the power reception body 141. That is, while the wire support body 161 maintains at a position at which the wire 162 is connected to the power reception cable 146 and at which a connection of the wire 162 to the power reception cable 146 is released, when the wire 162 is drawn-out from the power reception cable 146, the wire support body 161 is together drawn-out, and when the wire 162 is returned to an original position, the wire support body 161 prevents the wire 162 from separating in a direction of the power reception body 141.

The wire 162 is disposed at the inside of the power transmission crane 120, and one side of the wire 162 is positioned in a direction of the power transmission connector 115, and the other side thereof is supported by the wire support body 161. When the power reception cable 146 is drawn-out and is returned to an original position, the wire 162 is supported by the cable support body 125 of the power transmission crane 120 in a fixed state and moves together with the cable support body 125.

The drawn-out connector 163 is disposed at an end portion of the other side of the wire 162, and the drawn-out connector 163 is installed to couple to the cable connector 148 of the power reception cable 146 supported by the power reception cable support body 147 and is installed to release coupling to the cable connector 148 by operation of the power transmission crane 120.

At a coupling position of the cable connector 148 and the drawn-out connector 163, when the power transmission crane 120 moves downward, an elastic support body 164 is moved to insert and fix the cable connector 148 by elasticity, and when the power transmission crane 120 moves upward, the elastic support body 164 for releasing fixing of the cable connector 148 by elasticity is installed. When the power transmission crane 120 moves downward, the elastic support body 164 is opened while pressing an upper direction of the cable connector 148, and while the cable connector 148 is positioned at the inside of the drawn-out connector 163, the elastic support body 164 is returned to an original position and maintains a fixed state. Further, when the power transmission crane 120 moves upward, the cable connector 148 is opened while pressing the elastic support body 164 in a lower direction, and fixing of the elastic support body 164 is released.

The drawn-out cover 165 is disposed at an end portion of one side of the outside of the power transmission crane 120 and encloses the wire support body 161. The drawn-out cover 165 encloses the wire support body 161 that supports the wire 162 and is formed in a size that encloses the power reception cover 144 from the outside. That is, when the power reception cable 146 is drawn out, while the drawn-out cover 165 moves downward by operation of the power transmission crane 120, the drawn-out cover 165 is supported in a state that covers the entire power reception cover 144, and after the drawn-out cover 165 moves upward, the drawn-out cover 165 encloses the wire 162 and the wire support body 161, thereby preventing rainwater or seawater from injecting to the inside.

The wire drum 166 is disposed at a position of the power transmission connector 115 of the power transmission crane 120, and the wire 162 is wound by multiple times in an approximately cylinder shape. At one side of the wire drum 166, in order to provide rotation power of the wire drum 166, a wire winding motor 167 is connected and installed. When the wire winding motor 167 is operated, the wire drum 166 rotates, and while the wound wire 162 is wounding or unwound in a rotation direction, the wire 162 draws out the power reception cable 146 and returns the power reception cable 146 to an original position.

Operation of the power transmitting and receiving device using a ship according to another exemplary embodiment of the present invention will be described as follows.

First, while the ship 1 runs, by supplying sea waste received at the waste receiving chamber 112 to the generator 111, power is generated by combustion, and the generated power is supplied to the power transmission connector 115 in a state rectified through the rectifier 114.

When the ship 1 runs and is positioned at a periphery of the power reception device 140, the wire support body 161 for preventing injection of rainwater and seawater into the drawn-out cover 165 by operation of the power transmission crane 120 is positioned at an upper portion of the power reception body 141. In a state in which the wire support body 161 is positioned at an upper portion of the power reception body 141, when the wire support body 161 moves downward by operating the power transmission crane 120, the drawn-out connector 163 having the elastic support body 164 disposed at an end portion of the other side of the wire 162 is moved downward. When the drawn-out connector 163 moves downward, the opening and closing device 145 is operated, and while the opening and closing portion 144a of the power reception cover 144 is opened, the drawn-out connector 163 is inserted into the inside of the power reception cover 144. While the drawn-out connector 163 is inserted into the inside of the power reception cover 144 and is pressed at an upper portion of the cable connector 148 supported by the power reception cable support body 147, when the elastic support body 164 is opened and the cable connector 148 is inserted into the inside of the drawn-out connector 163, the elastic support body 164 is closed again by elasticity and is fixed.

In a state in which the drawn-out connector 163 and the cable connector 148 are fixed, by operating each of the wire winding motor 167 and the power reception winding motor 149a, while the power reception cable 146 is unwound and the wire 162 is wound, the power reception cable 146 and the wire 162 are together supported by the cable support body 125 of the power transmission crane 120 and are drawn out in a direction of the power transmission connector 115.

When the power reception cable 146 is drawn-out in a direction of the power transmission connector 115, the power reception cable 146 is connected to the power transmission connector 115, and power rectified in the rectifier 114 is transmitted to an island or coast region through the power reception cable 146. In this way, power is transmitted through the power reception cable 146, and after transmission of power is terminated, in a state in which a connection of the power reception cable 146 and the power transmission connector 115 is released, the wire winding motor 167 and the power reception winding motor 149a are each operated.

By operating the wire winding motor 167, while the wire 162 is unwound and the power reception cable 146 is wound, the power reception cable 146 and the wire 162 are together moved in a direction of the wire support body 161. When the wire 162 is supported by the wire support body 161 and the power reception wire 162 is supported by the power reception cable support body 147, the wire support body 161 moves upward by operation of the power transmission crane 120. When the wire support body 161 moves upward, while the drawn-out connector 163 together moves upward, the elastic support body 164 is pressed in a lower direction and fixing of the wire 162 and the power reception cable 146 is released by elasticity, and in a state in which fixing of the wire 162 and the power reception cable 146 is released, while the power transmission crane 120 is shortened, the power transmission crane 120 moves downward and thus the drawn-out device 160 is together positioned at the inside of the ship 1, and the power reception cover 144 is closed by operation of the opening and closing device 145. In a state in which the power transmission crane 120 is positioned at the inside of the ship 1, while the power transmission crane 120 moves, the power transmission crane 120 transmits power to another power reception device 140.

Therefore, by winding and unwinding of the power reception cable 146 and the wire 162, power generated in the generator 111 is supplied to the island and coast region through the power reception body 141.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### Industrial Applicability

By transmitting power generated in a power plant at the inside of a ship moving at the sea to an island or seashore region difficult to build a power plant, a cost according to construction of the power plant is reduced and by generating new reproduction energy using sea waste, the present invention can be used for industry that supplies energy with a small cost.

## Claims

1. A marine power transmitting and receiving system using a ship, comprising:
a power generation device disposed at the inside of the ship and for generating power by generation;
a power transmission crane disposed at one side of the ship and protruded to preset one side of the outside of the ship;
a power transmission cable having one side connected to the power generation device and having the other side supported by the power transmission crane and disposed at one side of the outside to transmit generation power in the power generation device;
a power transmission connecting device disposed at an end portion of one side of the outside of the power transmission crane and connected to the power transmission cable to be fastened to supply transmitted power; and
a power reception device separately disposed from one side of the ship and connected to supply power generated in the power generation device to the power transmission connecting device and having a power reception cable for supplying power supplied to one side to the outside,
wherein in a state in which the ship is moved to a periphery of the power reception device, by positioning the power transmission connecting device for supporting the power transmission cable at an upper portion of the power reception device by manipulating of the power transmission crane, the power transmission connecting device and the power reception device are fastened, and thus power generated in the power generation device is supplied to the outside through the power reception cable of the power reception device fastened to the power transmission connecting device at the sea via the power transmission cable.

2. The marine power transmitting and receiving system of claim 1, wherein the power generation system comprises:
a waste receiving chamber disposed at the inside of the ship and in which sea waste is loaded to supply as fuel of power generation;
a generator disposed at the inside of the ship and positioned at one side of the waste receiving chamber and for receiving supply of sea waste, which is fuel to generate power by power generation; and
a rectifier installed between the generator and the power transmission cable and for rectifying to convert power generated in the generator to power that can transmit,
wherein the power generation device generates power in the generator using the sea waste loaded in the waste receiving chamber as fuel at the inside of the moved ship, rectifies power transmitted to the rectifier, and supplies the rectified power to the power transmission cable.

3. The marine power transmitting and receiving system of claim 1, wherein the power transmission crane comprises:
a crane strut fxed to one side of the ship and protruded to an upper portion;
a crane arm having one side protruded to the crane strut and protruded to one side of the outside to be supported to adjust an angle thereof to the crane strut; and
a cable support body disposed at the inside of the crane strut and for supporting the power transmission cable positioned at the crane arm side through the crane strut,
wherein the other side of the power transmission cable is connected to the power transmission connecting device via the crane strut and the crane arm while being supported by the cable support body in a state in which one side of the power transmission cable is connected to the power generation device.

4. The marine power transmitting and receiving system of claim 3, wherein the crane strut comprises:
a lower strut fixed to one side of the ship and provided in a strut shape in an upper direction at one side of the ship;
an upper strut disposed at an upper portion of the lower strut and separated from the lower strut to be supported by the crane arm; and
a vertical transfer device disposed between the lower strut and the upper strut and for vertically transferring the upper strut,
wherein the upper strut is vertically moved from the lower strut fixed to the ship by operation of the vertical transfer device.

5. The marine power transmitting and receiving system of claim 3, wherein the crane arm comprises:
arm bodies disposed in plural at one side of the crane strut and extended toward one side in an overlapped state; and
extensible devices each disposed in an overlapped lower portion of the plurality of arm bodies and for moving to extend and press the overlapped arm body in one side direction,
wherein the arm bodies are extended and retracted to move the power transmission connecting device disposed at an end portion of one side in a direction of the power reception device by operation of the extensible device when the power reception device is fastened, and the arm bodies are pressed in a direction of the crane strut by operation of the extensible device, when power supply to the power reception device is complete.

6. The marine power transmitting and receiving system of claim 5, wherein the extensible device comprises:
extensible gears each disposed at an upper portion of the plurality of arm bodies and provided in a rack gear form with a preset length to move in one side direction of the outside in which the arm bodies are moved;
moving gear bodies each disposed at an upper portion of the extensible gear and gear-coupled to the extensible gear to be provided in a pinion gear form to move together the extensible gear and the arm body by a rotation; and
extensible motors connected to the moving gear body and each positioned at one side of the plurality of arm bodies and for providing power for rotating the moving gear body,
wherein the plurality of arm bodies each are moved together with the extensible motor while the moving gear body rotates by operation of the extensible motor installed at each arm body to be extended and retracted on a step basis.

7. The marine power transmitting and receiving system of claim 1, wherein the power transmission connecting device comprises:
at least one fastening body disposed at one side of the outside of the power transmission crane and connected to supply power to the power transmission cable;
a fastening shaft disposed at one side of the fastening body and rotatably connected to the fastening body and supported by the fastening body and having a fastening inserting portion of a reduced sectional area in a lower direction and having a fastening screw portion of a screw form in an end portion of a lower portion;
a fastening motor disposed at an upper portion of the fastening shaft and connected to the fastening shaft to provide rotating power by operation; and
a fastening cover disposed at an upper portion of the fastening body and having an opened lower portion while enclosing each of the fastening body, the fastening shaft, and the fastening motor,
wherein the fastening body is installed in one or in plural according to a kind of power such as a single-phase AC, DC, and multiple-phase AC supplied from the power transmission cable, the fastening body is connected to rotatably support the fastening shaft rotating by operation of the fastening motor and can supply power supplied from the power transmission cable to the connected fastening shaft, and the fastening screw portion of the fastening shaft is inserted into the power reception device in a rotating direction by operation of the fastening motor to be screw-fastened to the power reception device and to release fastening to the power reception device.

8. The marine power transmitting and receiving system of claim 1, wherein the power reception device comprises:
a power reception body separately disposed from one side of the ship and having the power reception cable disposed at a lower portion;
a power reception connector disposed at the inside of the power reception body and connected to the power reception cable and having a power reception insertion hole to be inserted when being connected to the power transmission connecting device at the center and having an insertion screw portion of a screw form at an inside surface of the power reception insertion hole and provided in at least one;
a power reception support body disposed at an upper portion of at least one power reception connector and having a sectional area enlarged to an upper portion and for supporting when fastened to the power transmission connecting device; and
a power reception cover disposed at an upper portion of the power reception body and for enclosing the power reception connector and the power reception support body,
wherein the power reception connector is connected by the power reception cable to a location to which power is supplied, is screw-fastened by the insertion screw portion to the power transmission connecting device, and supplies power supplied through the power reception cable to the power reception cable.

9. The marine power transmitting and receiving system of claim 8, further comprising:
an opening and closing body having an opening and closing portion having an opened portion to insert the power transmission connecting device at the power reception cover and disposed at the inside of the power reception cover and installed to open and close the opening and closing portion having an opened portion;
an opening and closing rotation shaft disposed at the inside of the power reception cover and connected to open and close the opening and closing portion by a rotation to the inside of the opening and closing body; and
an opening and closing motor disposed at the inside of the power reception cover and connected to provide power for rotating the opening and closing rotation shaft,
wherein the opening and closing body opens and closes the opening and closing portion for inserting the power transmission connecting device while rotating together with the opening and closing rotation shaft rotated by operation of the opening and closing motor.

10. The marine power transmitting and receiving system of claim 8, further comprising a fixed structure disposed at a lower portion of the power reception body and for fixing the power reception body at an upper portion in a structure form fixed to the bottom of the sea.

11. A marine power transmitting and receiving system using a ship, comprising:
a power generation device disposed at the inside of the ship and for generating power by generation;
a power transmission crane disposed at one side of the ship and protruded to preset one side of the outside of the ship;
a power reception device separately disposed from one side of the ship and having a power reception cable wound to supply power supplied to the inside to the outside; and
a drawn-out device disposed at one side of the power transmission crane and having a wire connected to the power reception cable wound in the power reception device through the power transmission crane to the power generation device and wound to be drawn-out in a direction of the power generation device,
wherein in a state in which the ship is moved to a periphery of the power reception device, the drawn-out device is positioned at an upper portion of the power reception device through the power transmission crane and is connected to the power reception cable wound in the power reception device, and in a state in which the power reception cable is drawn-out in a direction of the power generation device, the drawn-out device is connected to the power reception cable and supplies power generated in the power generation device to the outside through the drawn-out power reception cable.

12. The marine power transmitting and receiving system of claim 11, wherein the power generation device comprises:
a waste receiving chamber disposed at the inside of the ship and in which sea waste is loaded to supply as fuel of power generation;
a generator disposed at the inside of the ship and positioned at one side of the waste receiving chamber and for receiving supply of sea waste, which is fuel to generate power by power generation;
a rectifier installed between the generator and the power transmission cable and for rectifying to convert power generated in the generator to power that can transmit; and
a power transmission connector disposed at one side of the rectifier and connected to the power reception cable to transmit power rectified in the rectifier,
wherein the power generation device generates power in the generator using the sea waste loaded in the waste receiving chamber as fuel at the inside of the moved ship, rectifies the power to power to be transmitted with the rectifier, and is connected to a power transmission connector with the power reception cable drawn-out and connected to the drawn-out device to transmit power.

13. The marine power transmitting and receiving system of claim 12, wherein the power reception device comprises:
a power reception body separately disposed from one side of the ship and in which the other side of the power reception cable having one side connected to the outside is positioned in an upper direction of the inside;
a power reception cable support body disposed at the inside of the power reception body and positioned at an upper portion of the power reception body and for supporting the power reception cable;
a cable connector disposed at an end portion of the other side of the power reception cable and connected to the wire when drawing out the power reception cable with the drawn-out device;
a power reception drum disposed at the inside of the power reception body and wound by multiple times with the power reception cable;
a power reception winding motor connected at one side of the power reception drum and for providing drawn-out power while the power reception cable is unwound and wound according to a rotation of the power reception drum; and
a power reception cover disposed at an upper portion of the power reception body and for enclosing the power reception cable support body and the power reception drum,
wherein when the power reception cable is fixed to the wire in a state wound by multiple times in the power reception drum, the power reception drum is rotated by operation of the power reception winding motor and is drawn out to interlock with the drawn-out device while the power reception drum is unwound to be connected to the power generation device, and after transmission of power is terminated, the power reception cable is wound by multiple times while the power reception drum is rotated by operation of the power reception winding motor to return to an original position while interlocking with the drawn-out device in a state in which connection to the power generation device is released, and in a state in which coupling to the wire is thus released, the power reception cable is received at the inside of the power reception body.

14. The marine power transmitting and receiving system of claim 13, further comprising:
an opening and closing body having an opening and closing portion having an opened portion to insert the power transmission connecting device at the power reception cover and disposed at the inside of the power reception cover and installed to open and close the opening and closing portion with an opened portion;
an opening and closing rotation shaft disposed at the inside of the power reception cover and connected to open and close the opening and closing portion by a rotation to the inside of the opening and closing body; and
an opening and closing motor disposed at the inside of the power reception cover and connected to provide power for rotating the opening and closing rotation shaft,
wherein the opening and closing body opens and closes the opening and closing portion for inserting the wire while rotating together with the opening and closing rotation shaft rotated by operation of the opening and closing motor.

15. The marine power transmitting and receiving system of claim 13, further comprising a fixed structure disposed at a lower portion of the power reception body and for fixing the power reception body at an upper portion in a structure form fixed to the bottom of the sea.

16. The marine power transmitting and receiving system of claim 13, wherein the drawn-out device comprises:
a wire support body disposed at an end portion of one side of the outside of the power transmission crane and for supporting to maintain a position at which the wire is inserted into the power reception device;
a drawn-out connector disposed at an end portion of one side of the wire and inserted into the power reception cable connector and fixed to the power reception cable connector when the power reception cable is drawn-out and having an elastic support body for fixing the power reception cable connector and releasing fixing of the power reception cable connector while being moved by elasticity at the inserted and fixed one side;
a drawn-out cover disposed at an end portion of one side of the outside of the power transmission crane and for enclosing the wire support body;
a wire drum disposed at one side of the power transmission crane and for winding the wire supported by the wire support by multiple times; and
a wire winding motor connected at one side of the wire drum and connected to the power reception cable and for providing drawn-out power while the wire is unwound and wound according to a rotation of the wire drum,
wherein in a state in which the wire is wound in the wire drum by multiple times, when the wire is fixed to the power reception cable with operation of the power transmission crane, the wire is wound while be interlocked with the power reception device by operating the wire winding motor, and the power reception cable is drawn out to connect to the power generation device, after transmission of power is terminated, while the wire drum is rotated with operation of the wire winding motor while be interlocked with the power reception device in a state in which a connection to the power generation device is released, the wire is unwound and maintains a state supported by the wire support body, which is an upper position of the power reception device, and
when the power reception cable is connected to the wire support body, while the elastic support body is opened, the wire support body is inserted into the elastic support body and is fixed to the elastic support body and thus the wire and the power reception cable are together drawn-out, and when the wire support body is returned to an original position, while the wire is latched to the wire support body, the elastic support body is opened and thus fixing of the wire and the power reception cable is released.

17. The marine power transmitting and receiving system of claim 11, wherein the power transmission crane comprises:
a crane strut fixed to one side of the ship and protruded to an upper portion;
a crane arm having one side protruded to the crane strut and protruded to one side of the outside to be supported to adjust an angle thereof to the crane strut; and
a cable support body disposed at the inside of the crane strut and for supporting the wire positioned at the crane arm side through the crane strut and the power transmission cable connected to the wire,
wherein the power reception cable is drawn out in a state connected to the wire supported by the cable support body, is connected to the power generation device via the crane strut and the crane arm while being supported by the cable support body together with the wire, and supplies power to the outside.

18. The marine power transmitting and receiving system of claim 17, wherein the crane strut comprises:
a lower strut fixed to one side of the ship and provided in a strut shape in an upper direction at one side of the ship;
an upper strut disposed at an upper portion of the lower strut and separated from the lower strut to support the crane arm; and
a vertical transfer device disposed between the lower strut and the upper strut and for vertically transferring the upper strut,
wherein the upper strut is vertically moved from the lower strut fixed to the ship by operation of the vertical transfer device.

19. The marine power transmitting and receiving system of claim 17, wherein the crane arm comprises:
arm bodies disposed in plural at one side of the crane strut and extended toward one side in an overlapped state; and
extensible devices each disposed in an overlapped lower portion of the plurality of arm bodies and for moving to extend and press the overlapped arm bodies in one side direction,
wherein the arm bodies are extended and retracted to move the drawn-out device disposed at one side in a direction of the power reception device by operation of the extensible device when the arm bodies are fastened to the power reception device, and the arm bodies are pressed in a direction of the crane strut by operation of the extensible device, when power supply to the power reception device is complete.

20. The marine power transmitting and receiving system of claim 19, wherein the extensible device comprises:
extensible gears each disposed at an upper portion of the plurality of arm bodies and provided in a rack gear form with a preset length to move in one side direction of the outside in which the arm bodies are moved;
moving gear bodies each disposed at an upper portion of the extensible gear and gear-coupled to the extensible gear to be provided in a pinion gear form to move together with the extensible gear and the arm body by a rotation; and
extensible motors connected to the moving gear body and each positioned at one side of the plurality of arm bodies to provide power for rotating the moving gear body,
wherein the plurality of arm bodies each are moved together with the extensible motor while the moving gear body rotates by operation of the extensible motor installed at each arm body to be extended and retracted on a step basis.
